# EUROPEAN PATENT SPECIFICATION

(11) **EP 3 768 099 B1**
(45) Date of publication and mention of the grant of the patent: **04.05.2022**
(21) Application number: 19715227.5
(22) Date of filing: 12.03.2019
(51) Int. Cl.: A24C 5/18, A24C 5/31, A24C 5/34

(54) **A STATION FOR THE CONVEYING AND INSPECTION OF A SEMI-FINISHED PRODUCT OF THE TOBACCO INDUSTRY**
STATION ZUR FÖRDERUNG UND PRÜFUNG EINES HALBZEUGS DER TABAKVERARBEITENDEN INDUSTRIE
STATION POUR LE TRANSPORT ET L'INSPECTION D'UN PRODUIT SEMI-FINI DE L'INDUSTRIE DU TABAC

(30) Priority: 19.03.2018 IT 201800003717
(43) Date of publication of application: 27.01.2021
(73) Proprietor: G.D S.p.A., 40133 Bologna (IT)
(72) Inventor: EUSEPI, Ivan, 40133 Castelmaggiore (Bologna) (IT); STIVANI, Eros, 40133 Bologna (IT); MENGOLI, Fausto, 40133 Bologna (IT); TRIVISONNO, Eura, 40133 Bologna (IT); SARTONI, Massimo, 40133 Bologna (IT); FEDERICI, Luca, 40135 Bologna (IT)
(74) Representative: Bianciardi, Ezio
(86) International application number: PCT/IB2019/051984
(87) International publication number: WO 2019/180540

(56) References cited:
- WO-A1-2016/162292
- GB-A- 2 179 444
- GB-A- 2 182 836
- GB-A- 2 201 079
- GB-A- 2 207 595
- Anonymous: "PROTOS 90E suction rod conveyor - Hauni GmbH", , 31 July 2018 (2018-07-31), XP055526295, Retrieved from the Internet: URL:https://www.hauni.com/hu/services/know ledge-transfer/training/training-films/pro tos-90e-suction-rod-conveyor.html [retrieved on 2018-11-22]

## Description

### Technical field

This invention relates to a station for the conveying and inspection of a semi-finished product of the tobacco industry.

More specifically, this invention has for an object to provide a station capable of moving and at the same time inspecting a semi-finished product of the tobacco industry in order to assess its conformity to one or more requirements of the end product.

### Background art

In many different situations in the tobacco industry, it is necessary to wrap a suitable semi-finished product in a wrapping material to make a rod which, at later stages in the production process, is divided into separate segments to form the finished product to be made.

A strongly felt need in the industry is that of being able to efficiently check some of the properties of the semi-finished product, such as weight or density, so as to ensure that the production process of a rod, and ultimately of the finished product, complies with one or more quality parameters associated with the properties measured.

This need is normally satisfied by taking measurements of the rod after the rod has been formed; that is to say, when the semi-finished product has been wrapped completely in a web of wrapping material, in order to check that it has been filled correctly.

Measuring is performed by non-invasive measuring means such as sensors which use electromagnetic waves that are capable of passing through the continuous rod to measure one or more properties of the semi-finished product.

This solution is not, however, applicable in some production contexts: for example, if the web of wrapping material has metallic or at least partly metallized portions, these interfere with the measuring process by screening or distorting the radiation and thus preventing measurements from being taken correctly through the thickness of the semi-finished product.

This problem is all the more evident in the following example of machines for the production of continuous rods of tobacco.

Generally speaking, machines for making continuous rods of tobacco involve the use of a substantially vertical duct which is fed from below with a continuous flow of tobacco particles and at the top end of which there is a belt, preferably a suction belt, on which a continuous mass of tobacco is formed.

The suction belt is adapted to feed the semi-finished, continuous mass of tobacco along a predetermined path defined by the suction belt itself to a preforming device, which produces a continuous stream, and then to a station for forming a continuous tobacco rod where a web of wrapping material is wrapped around the continuous tobacco stream to form a continuous rod or cylinder of the tobacco industry, such as a cigarette rod, which is then cut into segments by a suitable cutting device.

More specifically, before being sent into the forming channel of the forming beam, the continuous stream of tobacco is suitably preformed and progressively compacted by the preforming device.

In this context, to ensure that the articles resulting from this production process have the right amount of tobacco in them, it is essential to measure the quantity of tobacco that is transferred into the infeed end of the forming channel.

It is obvious that the properties of the semi-finished product cannot be measured in the manner mentioned above if the paper used to wrap it comprises metal particles.

In this specific context, machines are known in the prior art in which the detecting station is integrated in the channel defined by the suction belt, as described, for example, in document WO2016162292.

The Applicant has found, however, that this solution has considerable operational disadvantages which make it very inefficient in the performance of its functions.

In particular, the integration of the sensors in the walls of the conveying channel leads to considerable problems of adjustment in the field because there are a great deal of variables which make the channel unstable (wall wear, frequent need to adjust and replace the components because the components are subject to wear caused by the product flow).

Moreover, since the sensor is integrated in the suction belt conveyor, the sensor moves as one with the conveyor, creating difficulties managing the cables which carry the signals from the antennas to the signal processing unit: these cables are delicate and moving them may cause them to deteriorate and to make readings unstable.

Generally speaking, these problems also affect other tobacco industry production processes in which a rod, specifically a continuous rod, is formed by wrapping a semi-finished product, such as an aerosol generating material, a mass of tobacco fibre, a stream of filter material, a uniform or non-uniform succession of segments of filter material or a stream of tobacco-derived material, in a web of wrapping material comprising metallic particles. Another known solution is disclosed in GB2182836A wherein an apparatus ad method for measuring the density of a tobacco stream are presented.

### Disclosure of the invention

In this context, the technical purpose which forms the basis of the present invention is to propose a conveying and inspection station to overcome at least some of the above mentioned disadvantages of the prior art.

In particular, this invention has for an aim to provide a conveying and inspection station capable of allowing optimum and accurate checking of the properties of the semi-finished product using an electromagnetic wave detector.

The technical purpose and aims specified are substantially achieved by different embodiments of the invention.

The aims are also achieved by the further features described below, including the technical features set out in one or more of the appended claims.

This invention discloses a station for the conveying and inspection of a semi-finished product of the tobacco industry, comprising a conveyor with a belt, preferably a suction belt, and at least one electromagnetic detector. The conveyor is configured to hold and convey the semi-finished product along a conveying path and comprises at least one guide channel delimited at the sides by two side walls and at the top by a suction belt. The electromagnetic detector defines a detection channel configured to receive slidably therein at least one portion of the semi-finished product and comprises at least one electromagnetic sensor for detecting one or more properties of the semi-finished product in transit in the detection channel.

The conveying and inspection station can be switched between an operating configuration, where the at least one electromagnetic detector is coupled to the belt conveyor in such a way that the guide channel is disposed across the electromagnetic detector to allow the electromagnetic detector to detect at least one property of the semi-finished product transported by the belt conveyor, and a non-operating configuration, where the at least one electromagnetic detector is uncoupled from the belt conveyor in such a way that the guide channel is disposed outside the electromagnetic detector.

Advantageously, the special structure of the station according to this invention allows making the working zones more accessible, thus considerably facilitating cleaning, maintenance and repair operations and making operation and use of the station more efficient.

The dependent claims, which are incorporated herein by reference, correspond to different embodiments of the invention.

### Brief description of drawings

Further features of the invention and its advantages are more apparent in the non-limiting description below, with reference to a preferred but non-exclusive embodiment of a conveying and inspection station, as illustrated in the accompanying drawings, in which:

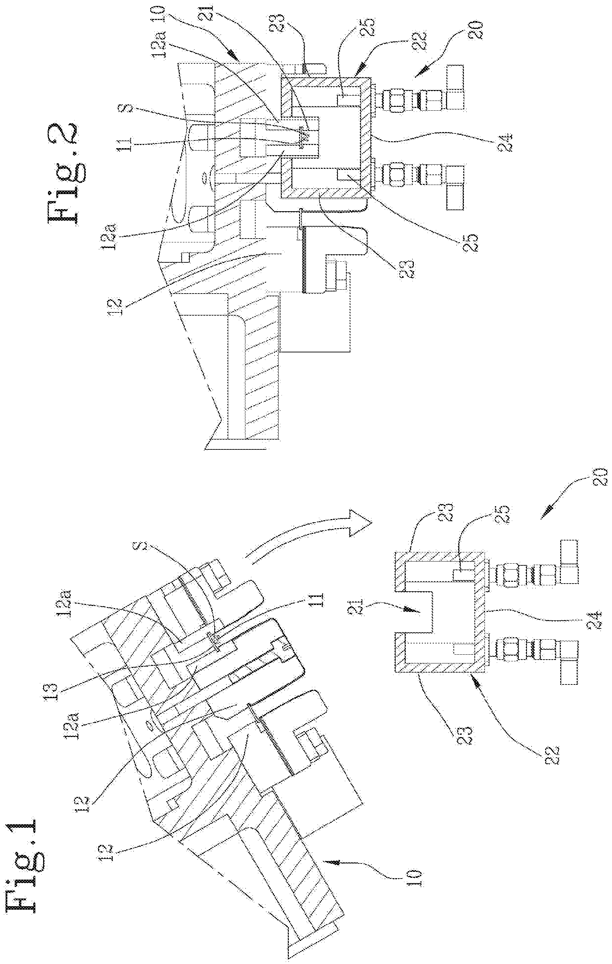

- Figure 1 shows a cross section of a conveying and inspection station in a non-operating configuration;
- Figure 2 shows a cross section of a conveying and inspection station in an operating configuration;

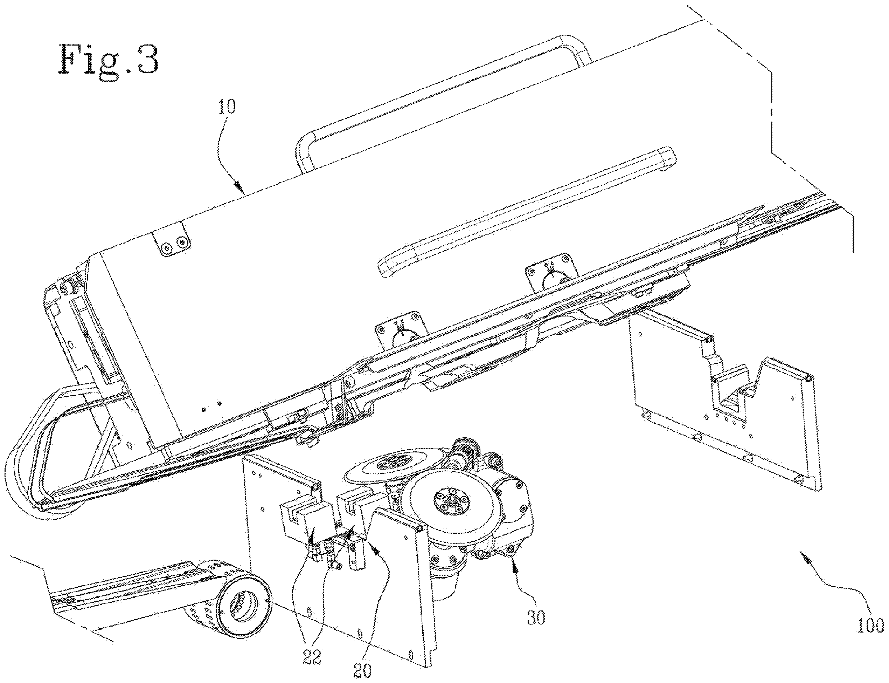

- Figure 3 shows a perspective view of a conveying and inspection station in a non-operating configuration;

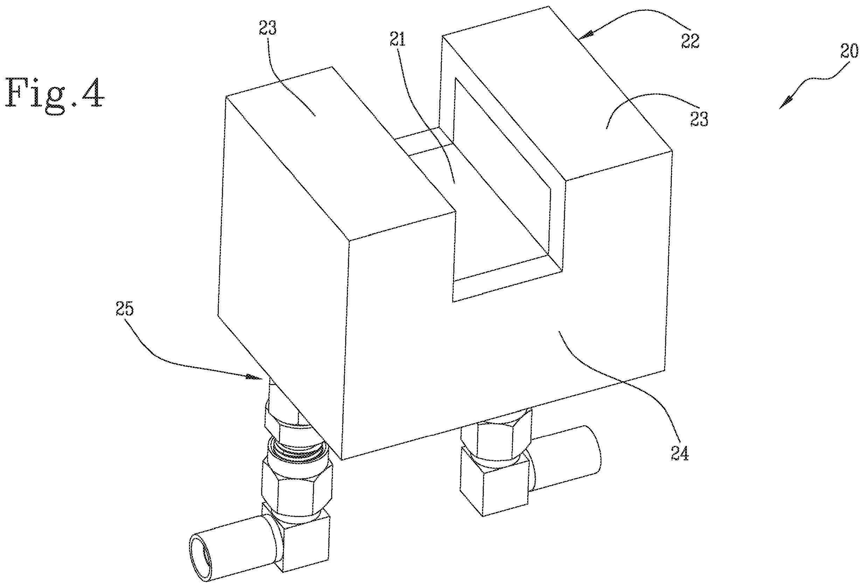

- Figure 4 shows a perspective view of the electromagnetic detector of this invention.

### Detailed description of preferred embodiments of the invention

The numeral 100 in the accompanying drawings generally denotes a station for the conveying and inspection of a semi-finished product "S" of the tobacco industry.

The semi-finished product "S" may be any material used in the tobacco industry as a filling for the components of a smoking article: for example, an aerosol generating material, a mass of tobacco fibre, a stream of filter material, a uniform or non-uniform succession of segments of filter material or a stream of tobacco-derived material.

The station 1 comprises a conveyor 10 with a belt 13, preferably a suction belt, and at least one electromagnetic detector 20.

The conveyor 10 is configured to hold and convey the semi-finished product "S" along a conveying path and comprises at least one guide channel 11 delimited at the sides by two side walls 12 and at the top by a belt 13, preferably a suction belt.

The suction belt 13 is perforated and is supplied from above with a negative airflow which creates a negative pressure on the underside of the suction belt 13.

That way, the suction belt 13 can hold against its underside the semi-finished product "S" which it receives from an upwardly extending duct in order to convey it along the guide channel 11.

The presence of the side walls 12 allows defining a fixed transverse cross section for the semi-finished product "S" flowing through the guide channel 11, on leaving which the semi-finished product "S" reaches a forming station where it is wrapped in a wrapping material which may be at least partly metallic or metallized in order to make a continuous rod of the tobacco industry.

The suction belt 13 slides within suitable guides which engage a peripheral portion of it in order to help correctly tensioning it during use of the conveyor 10.

In a preferred embodiment, shown in the accompanying drawings, the guides are made as a single part with the side walls 12 and thus form part of the conveyor 10.

The at least one electromagnetic detector 20 defines a detection channel 21 configured to receive slidably therein at least one portion of the semi-finished product and comprises at least one electromagnetic sensor 22 for detecting one or more properties of the semi-finished product in transit through the detection channel 21.

The term "electromagnetic detector" 22 is used to denote any sensor capable of performing a non destructive measurement through the thickness of the semi-finished product "S" using electromagnetic waves, specifically electromagnetic waves whose frequency is such as to be susceptible of interference from, or to be masked/distorted by, interaction with metallic particles.

By "property" of the semi-finished product is meant one or more features of interest, depending on the type of filling material being measured. These properties may comprise, for example, those in the following, non-exhaustive list: weight, density, humidity, inclusion of additional elements. More in detail, again by way of example, where the semi-finished product "S" is loose tobacco, it might be necessary to measure the weight of the tobacco actually fed to subsequent stages of production, in order to ensure that each product made contains the right quantity of tobacco. The station 100 can be switched between an operating configuration, where the at least one electromagnetic detector 20 is coupled to the conveyor 10 in such a way that the guide channel 11 is disposed across the electromagnetic detector 20 to allow the latter to detect at least one property of the semi-finished product "S" transported by the conveyor 10, and a non-operating configuration, where the at least one electromagnetic detector 20 is uncoupled from the conveyor 10 in such a way that the guide channel 11 is disposed outside the electromagnetic detector 20.

In other words, the station 100 may adopt an operating configuration, which coincides with a use configuration, where the conveyor 10 and the electromagnetic detector 20 are coupled in such a way as to cause the semi-finished product "S" to slide at least partly inside the detection channel 21.

The station 100 may also adopt a non-operating configuration where the conveyor 10 and the electromagnetic detector 20 are uncoupled in such a way as to allow and facilitate maintenance and/or repair operations on individual components of the station 100, when necessary.

More specifically, in the operating configuration, the guide channel 11 and the detection channel 21 are at least partly interpenetrated and, in the non-operating configuration, the guide channel 11 and the detection channel 21 are uncoupled from each other.

In other words, in the operating configuration, the guide channel 11 is substantially inserted into the detection channel 21, thereby ensuring that the semi-finished product "S" being conveyed flows through both of the channels 11 and 21 at the same time.

In the operating configuration, the electromagnetic detector 20 is disposed outside the conveyor 10 and at least partly surrounds it.

Looking in more detail, the guide channel 11 is open at the bottom and the electromagnetic detector 20 has a U-shaped structure which is open at the top so that, in the operating configuration, the electromagnetic detector 20 is disposed under and partly closes the guide channel 11.

According to this invention, the switching between the operating and the non-operating configuration of the station 100 is obtained by moving the conveyor 10 and the detector 20 towards and away from each other. More specifically, switching from the non-operating condition to the operating condition is done by moving the conveyor 10 and the detector 20 towards each other, while switching from the operating condition to the non-operating condition is done by moving them away from each other.

In a preferred embodiment, the station 100 is switched between the operating and the non-operating configuration by a reciprocating movement of the conveyor 10 towards and away from the electromagnetic detector 20, which is fixed.

As shown in the accompanying drawings, the reciprocating movement is obtained by mutual rotation about a horizontal axis which lies in a substantially horizontal plane parallel to a conveying direction of the semi-finished product "S" through the station 100.

In order to be able to optimize the measuring process performed by the electromagnetic detector 20, the side walls 12 of the conveyor 10 may be provided with respective openings or breaks disposed and/or configured in such a way as to remain aligned with, but distinct from, the electromagnetic sensor 22 when the station 100 is in the operating configuration, so that the electromagnetic sensor 22 directly faces the material to be detected.

This feature makes it possible to prevent the side walls 12 from interfering with the measuring process.

Preferably, at a portion for coupling the conveyor 10 to the at least one electromagnetic detector 20, the side walls 12 are provided with insertion seats into which respective locating guides 12a can be inserted.

These locating guides 12a are made of a material that is substantially transparent to electromagnetic radiation in the working bandwidth interval of the at least one electromagnetic detector.

In other words, the side walls 12 of the guide channel 11 have breaks in them and, in the portion of the conveyor 10 close to the electromagnetic detector 20 when the station 100 is in the operating configuration, can be replaced by the locating guides 12a in order to ensure that the side walls 12 do not interfere with the process of inspecting the semi-finished product "S".

In a first possible embodiment, the locating guides 12a are inserted in the seats made in the side walls 12 and are connected fixedly thereto in such a way that a portion of the belt 13 is inserted in the locating guides 12a at all times, irrespective of the configuration adopted by the station 100. Looking in more detail, at a portion for coupling the conveyor 10 to the at least one electromagnetic detector 20, the locating guides 12a and the side walls 12 are provided with insertion seats. The locating guides 12a can be inserted into respective insertion seats.

In a second possible embodiment, the locating guides 12a are made as a single part with the electromagnetic detector 20. That means that when the station 100 is in the operating configuration, the conveyor belt 13 is inserted in the locating guides 12a because the conveyor 10 is coupled to the electromagnetic detector 20.

On the contrary, when the station 100 is in the non-operating configuration, the conveyor 10 is uncoupled from the electromagnetic detector 20 and thus, the conveyor belt 13 is outside/uncoupled from the locating guides 12a.

In the preferred embodiment illustrated in the accompanying drawings, the electromagnetic detector 20 has a U shape and comprises two parallel half-shells 23 and a base 24 which connects the two half-shells 23.

In this embodiment, the electromagnetic sensor 22 is interposed between the half-shells 23.

Looking in more detail, each electromagnetic detector 22 preferably comprises a pair of antennas 25 configured to transmit and/or receive an electromagnetic signal. Preferably, each half-shell 23 contains an antenna 25 configured to transmit and/or receive an electromagnetic signal so that the electromagnetic detector 20 can be configured to perform measurements in both transmission and reflective mode, depending on the user's requirements.

In the operating configuration, the two half-shells 23 are juxtaposed, preferably without backlash, on the outside of the side walls 12 of the conveyor 10 at the aforementioned openings or breaks.

Preferably, the electromagnetic detector 20 is a microwave detector, preferably configured to operate between 10⁹ and 10¹² Hz, and the detection channel 21 defines a detection chamber which, in the preferred embodiment, is a resonance chamber of the microwave detector.

In order to guarantee transfer of a correct quantity of semi-finished product "S" downstream of the conveyor 10, the station 100 comprises at least one levelling device 30 disposed along the conveying path of the semi-finished product "S", upstream of the at least one electromagnetic detector 20, and configured to remove part of the semi-finished product from the guide channel 11.

In other words, the at least one levelling device 30 is responsible for removing part of the semi-finished product "S" that is processed by the station 100, so as to allow controlling the quantity of semi-finished product "S" supplied to the processes downstream of the station 100 itself.

The electromagnetic sensor 22 is also configured to generate a signal identifying the at least one property measured, and the station comprises, or is associated with, a control unit which is configured to receive and process the identification signal to correct or vary the distance of the at least one levelling device 30 from the suction belt 13 as a function of the identification signal.

In other words, downstream of the at least one levelling device 30, the electromagnetic sensor 22 performs a measurement of the semi-finished product "S" and generates a signal representing that property and sends the signal to a specific control unit.

The control unit then processes the signal received from the electromagnetic sensor 22 and, as a function of the signal, modifies the distance of the at least one levelling device 30 relative to the suction belt 13, thereby varying the quantity of semi-finished product "S" removed from the guide channel 11.

For example, if the signal emitted by the electromagnetic sensor 22 indicates that the quantity of semi-finished product "S" in transit through the station 100 is excessively reduced, then the control unit causes the at least one levelling device 30 to move away from the suction belt 13, thereby reducing the quantity of semi-finished product "S" that is removed by the at least one levelling device 30.

For example, if the signal emitted by the electromagnetic sensor 22 indicates that the quantity of semi-finished product "S" in transit through the station 100 is excessively reduced, then the control unit causes the at least one levelling device 30 to move away from the suction belt 13, thereby reducing the quantity of semi-finished product "S" that is removed by the at least one levelling device 30.

Advantageously, the electromagnetic detector 20 is located downstream of the at least one levelling device 30 so that the semi-finished product "S" can be measured accurately just before it is transferred to the processes downstream of the station 100, thereby ensuring that the values measured effectively and correctly represent the properties of the semi-finished product transferred downstream of the station 100.

According to one particular aspect of this invention, the conveyor 10 comprises a plurality of guide channels 11, preferably two guide channels 11, each of which can be coupled to a respective electromagnetic detector 20.

Preferably, the electromagnetic detectors 20 are mounted on the same support, and are disposed spaced apart along the conveying direction of the semi-finished product "S"..

Also, for each guide channel 11, the station 100 comprises at least one levelling device 30 whose movement towards/away from the guide channel 11 is controlled by the signal produced by the respective electromagnetic detector 20.

It is also possible for the station 100 to be made in such a way that each guide channel 11 with each respective electromagnetic detector 20 can be switched from the operating configuration to the non-operating configuration individually and independently.

In other words, each guide channel 11 is associated with a respective electromagnetic detector 20 and these are movable relative to each other independently of the other guide channels and/or electromagnetic detectors 20 of the station 100 to enable them to switch from the operating configuration to the non-operating and vice versa independently of each other.

This invention also relates to a method for the conveying and inspection of a semi-finished product of the tobacco industry.

The method comprises preparing a conveying and inspection station 100 according to what is described above.

The station is then switched to the operating configuration to dispose the guide channel 11 across the electromagnetic detector 20 so that the semi-finished product "S" moving along the guide channel 11 is also conveyed through the detection channel 21.

Next, as the semi-finished product "S" passes through the detection channel 21, at least one of its properties is detected by the electromagnetic detector 20.

The method according to this invention also comprises the steps of generating a signal identifying the at least one property measured and correcting or varying the distance of the at least one levelling device 30 from the suction belt 13 as a function of the identification signal.

That way it is possible to use feedback to control the quantity of semi-finished product "S" that is conveyed to processes downstream of the station 100.

Advantageously, this invention achieves the preset aims by overcoming the disadvantages of the prior art by making available to the user a station for the conveying and inspection of a semi-finished product of the tobacco industry to optimize the efficiency of transferring the semi-finished product "S".

The invention also makes maintenance/repair operations easier thanks to the possibility of uncoupling the electromagnetic detector 20 from the conveyor 10 in the non-operating configuration.

## Claims

1. A station for the conveying and inspection of a semi-finished product of the tobacco industry, comprising:
- a conveyor (10) with a belt (13), preferably a suction belt, configured to hold and convey the semi-finished product along a conveying path, the conveyor (10) comprising at least one guide channel (11) delimited at the sides by two side walls (12) and at the top by a belt (13), preferably a suction belt;
- at least one electromagnetic detector (20) defining a detection channel (21) configured to receive slidably therein at least one portion of the semi-finished product, the electromagnetic detector (20) comprising at least one electromagnetic sensor (22) for detecting one or more properties of the semi-finished product in transit in the detection channel (21);
**characterized in that** the conveying and inspection station (100) can be switched between an operating configuration, where the at least one electromagnetic detector (20) is coupled to the conveyor (10) in such a way that the guide channel (11) is disposed across the electromagnetic detector (20) to allow the electromagnetic detector (20) to detect at least one property of the semi-finished product transported by the conveyor (10), and a non-operating configuration, where the at least one electromagnetic detector (20) is uncoupled from the conveyor (10) in such a way that the guide channel (11) is disposed outside the electromagnetic detector (20).

2. The station according to claim 1, wherein in the operating configuration, the guide channel (11) and the detection channel (21) are at least partly interpenetrated and wherein in the non-operating configuration, the guide channel (11) and the detection channel (21) are uncoupled from each other.

3. The station according to claim 1 or 2, wherein in the operating configuration, the electromagnetic detector (20) is disposed outside the conveyor (10) and at least partly surrounds the conveyor (10).

4. The station according to one or more of the preceding claims, wherein the guide channel (11) is open at the bottom and wherein the electromagnetic detector (20) has a U-shaped structure which is open at the top so that, in the operating configuration, the electromagnetic detector (20) is disposed under and closes the guide channel (11).

5. The station according to one or more of the preceding claims, wherein the conveying and inspection station (100) is switched between the operating and the non-operating configuration by a reciprocating movement between the conveyor (10) and the electromagnetic detector (20).

6. The station according to one or more of the preceding claims, wherein the conveying and inspection station (100) is switched between the operating and the non-operating configuration by a reciprocating movement of the conveyor (10) towards and away from the electromagnetic detector (20) and wherein the electromagnetic detector (20) is fixed.

7. The station according to claim 5 or 6, wherein the reciprocating movement is obtained by mutual rotation about a horizontal axis which lies in a substantially horizontal plane.

8. The station according to one or more of the preceding claims, wherein the side walls (12) of the conveyor (10) are provided with respective openings or breaks disposed and/or configured in such a way as to be aligned with the electromagnetic sensor (22) in the operating configuration, so that the electromagnetic sensor (22) directly faces the material to be detected.

9. The station according to one or more of the preceding claims, comprising a plurality of locating guide elements (12a) and the side walls (12) are provided with insertion seats at a portion for coupling the conveyor (10) to the at least one electromagnetic detector (20), the locating guide elements (12a) being insertable into the insertion seats.

10. The station according to one or more of the preceding claims, wherein the at least one electromagnetic sensor (22) comprises a pair of antennas (25) configured to receive and/or transmit an electromagnetic signal.

11. The station according to one or more of the preceding claims, wherein the electromagnetic detector (20) is a microwave detector, preferably configured to operate between 10⁹ and 10¹² Hz, and the detection channel (21) comprises a detection chamber, preferably a resonance chamber of the microwave detector.

12. The station according to one or more of the preceding claims, comprising at least one levelling device (30) disposed along the conveying path upstream of the at least one electromagnetic detector (20), the at least one levelling device (30) being configured to remove part of the semi-finished product from the guide channel (11).

13. The station according to one or more of the preceding claims, wherein the electromagnetic sensor (22) is configured to generate a signal identifying the at least one property measured, and wherein the station (100) comprises, or is associated with, a control unit which is configured to receive and process the identification signal to correct or vary the distance of the at least one levelling device (30) from the suction belt (13) as a function of the identification signal.

14. The station according to one or more of the preceding claims, wherein the conveyor (10) comprises a plurality of guide channels, each of which can be coupled to a respective electromagnetic detector (20), the electromagnetic detectors being preferably mounted on the same support, and wherein the electromagnetic detectors are disposed spaced apart along a conveying direction.

15. A method for the conveying and inspection of a semi-finished product of the tobacco industry, comprising the following steps:
- preparing a station (100) according to one or more of the preceding claims;
- switching the station (100) to the operating configuration;
- conveying the semi-finished product through the detection channel (21);
- by means of the electromagnetic detector (20), detecting at least one property of the semi-finished product as it passes through the detection channel (21).

16. The method according to claim 15, comprising the following steps:
- generating a signal identifying the at least one property measured;
- correcting or varying the distance of the at least one levelling device (30) from the suction belt (13) as a function of the identification signal.

## Patentansprüche

1. Station zur Förderung und Prüfung eines Halbzeugs der tabakverarbeitenden Industrie, umfassend:
- einen Förderer (10) mit einem Band (13), bei dem es sich vorzugsweise um ein Saugband handelt, ausgelegt, um das Halbzeug zu halten und entlang eines Förderwegs zu fördern, wobei der Förderer (10) mindestens einen Führungskanal (11) umfasst, der an den Seiten durch zwei Seitenwände (12) und an der Oberseite durch ein Band (13), bei dem es sich vorzugsweise um ein Saugband handelt, abgegrenzt ist;
- mindestens einen elektromagnetischen Detektor (20), definierend einen Detektionskanal (21), ausgelegt um verschiebbar innenseitig mindestens einen Abschnitt des Halbzeugs aufzunehmen, wobei der elektromagnetische Detektor (20) mindestens einen elektromagnetischen Sensor (22) umfasst, um eine oder mehrere Eigenschaften des im Detektionskanal (21) passierenden Halbzeugs zu detektieren,
**dadurch gekennzeichnet, dass** die Förder- und Prüfstation (100) zwischen einer Betriebsauslegung, in der der mindestens eine elektromagnetische Detektor (20) mit dem Förderer (10) gekoppelt ist, sodass der Führungskanal (11) quer durch den elektromagnetischen Detektor (20) angeordnet ist, um dem magnetischen Detektor (20) zu erlauben, mindestens eine Eigenschaft des vom Förderer (10) geförderten Halbzeugs zu detektieren, und einer Nichtbetriebsauslegung, in der der mindestens eine elektromagnetische Detektor (20) vom Förderer (10) abgekoppelt ist, sodass der Führungskanal (11) außerhalb des elektromagnetischen Detektors (20) angeordnet ist, umgeschaltet werden kann.

2. Station nach Anspruch 1, wobei der Führungskanal (11) und der Detektionskanal (21) in der Betriebsauslegung mindestens teilweise gegenseitig durchdrungen sind, und wobei der Führungskanal (11) und der Detektionskanal (21) in der Nichtbetriebsauslegung voneinander abgekoppelt sind.

3. Station nach Anspruch 1 oder 2, wobei der elektromagnetische Detektor (20) in der Betriebsauslegung außerhalb des Förderers (10) angeordnet ist und den Förderer (10) mindestens teilweise umgibt.

4. Station nach einem oder mehreren der vorhergehenden Ansprüche, wobei der Führungskanal (11) an der Unterseite offen ist und wobei der elektromagnetische Detektor (20) eine U-förmige Struktur aufweist, die an der Oberseite offen ist, sodass der elektromagnetische Detektor (20) in der Betriebsauslegung unter dem Führungskanal (11) angeordnet ist und diesen verschließt.

5. Station nach einem oder mehreren der vorhergehenden Ansprüche, wobei die Förder- und Prüfstation (100) zwischen der Betriebs- und der Nichtbetriebsauslegung durch eine Pendelbewegung zwischen dem Förderer (10) und dem elektromagnetischen Detektor (20) umgeschaltet wird.

6. Station nach einem oder mehreren der vorhergehenden Ansprüche, wobei die Förder- und Prüfstation (100) zwischen der Betriebs- und der Nichtbetriebsauslegung durch eine Pendelbewegung des Förderers (10) hinführend zum und wegführend vom elektromagnetischen Detektor (20) umgeschaltet wird und wobei der elektromagnetische Detektor (20) fix ist.

7. Station nach Anspruch 5 oder 6, wobei die Pendelbewegung durch eine gegenseitige Drehung um eine horizontale Achse erzielt wird, die in einer im Wesentlichen horizontalen Ebene liegt.

8. Station nach einem oder mehreren der vorhergehenden Ansprüche, wobei die Seitenwände (12) des Förderers (10) mit jeweiligen Öffnungen oder Durchbrüchen versehen sind, die so angeordnet und/oder ausgelegt sind, dass sie zum elektromagnetischen Sensor (22) in der Betriebsauslegung ausgerichtet sind, sodass der elektromagnetische Sensor (22) dem zu detektierenden Material direkt zugewandt ist.

9. Station nach einem oder mehreren der vorhergehenden Ansprüche, umfassend eine Vielzahl von Positionierführungselementen (12a), und die Seitenwände (12) sind mit Einfügesitzen an einem Abschnitt zum Koppeln des Förderers (10) mit mindestens einem elektromagnetischen Detektor (20) versehen, wobei die Positionierführungselemente (12a) in die Einfügesitze einfügbar sind.

10. Station nach einem oder mehreren der vorhergehenden Ansprüche, wobei der mindestens eine elektromagnetische Sensor (22) ein Paar von Antennen (25) umfasst, die ausgelegt sind, um ein elektromagnetisches Signal zu empfangen und/oder zu übermitteln.

11. Station nach einem oder mehreren der vorhergehenden Ansprüche, wobei der elektromagnetische Detektor (20) ein Mikrowellendetektor ist, der vorzugsweise ausgelegt ist, um zwischen 109 und 1012 Hz zu arbeiten, und der Detektionskanal (21) eine Detektionskammer, vorzugsweise eine Resonanzkammer des Mikrowellendetektors, umfasst.

12. Station nach einem oder mehreren der vorhergehenden Ansprüche, umfassend mindestens eine Nivellierungsvorrichtung (30), die entlang des Förderwegs stromaufwärts des mindestens einen elektromagnetischen Detektors (20) angeordnet ist, wobei die mindestens eine Nivellierungsvorrichtung (30) ausgelegt ist, um einen Teil des Halbzeugs aus dem Führungskanal (11) zu entfernen.

13. Station nach einem oder mehreren der vorhergehenden Ansprüche, wobei der elektromagnetische Sensor (22) ausgelegt ist, um ein Signal zu generieren, das die mindestens eine gemessene Eigenschaft identifiziert, und wobei die Station (100) eine Steuereinheit umfasst oder mit dieser assoziiert ist, die ausgelegt ist, um das Identifizierungssignal zu empfangen und zu verarbeiten, um den Abstand der mindestens einen Nivellierungsvorrichtung (30) vom Saugband (13) als eine Funktion des Identifizierungssignals zu berichtigen oder zu variieren.

14. Station nach einem oder mehreren der vorhergehenden Ansprüche, wobei der Förderer (10) eine Vielzahl von Führungskanälen umfasst, von denen ein jeder mit einem jeweiligen elektromagnetischen Detektor (20) gekoppelt werden kann, wobei die elektromagnetischen Detektoren vorzugsweise auf derselben Halterung montiert sind, und wobei die elektromagnetischen Detektoren beabstandet entlang einer Förderrichtung angeordnet sind.

15. Verfahren zur Förderung und Prüfung eines Halbzeugs der tabakverarbeitenden Industrie, umfassend die folgenden Schritte:
- Vorbereiten einer Station (100) nach einem oder mehreren der vorhergehenden Ansprüche;
- Umschalten der Station (100) in die Betriebsauslegung;
- Fördern des Halbzeugs durch den Detektionskanal (21);
- mittels des elektromagnetischen Detektors (20) Detektieren von mindestens einer Eigenschaft des Halbzeugs bei dessen Durchgang durch den Detektionskanal (21) .

16. Verfahren nach Anspruch 15, umfassend die folgenden Schritte:
- Generieren eines Signals, das die mindestens eine gemessene Eigenschaft identifiziert;
- Berichtigen oder Variieren des Abstands der mindestens einen Nivellierungsvorrichtung (30) vom Saugband (13) als eine Funktion des Identifizierungssignals.

## Revendications

1. Station pour le transport et l'inspection d'un produit semi-fini de l'industrie du tabac, comprenant :
- un convoyeur (10) avec une bande (13), de préférence une bande d'aspiration, configuré pour maintenir et transporter le produit semi-fini le long d'un chemin de transport, le convoyeur (10) comprenant au moins un canal de guidage (11) délimité sur les côtés par deux parois latérales (12) et sur le dessus par une bande (13), de préférence une bande d'aspiration ;
- au moins un détecteur électromagnétique (20) définissant un canal de détection (21) configuré pour recevoir de manière coulissante dans celui-ci au moins une partie du produit semi-fini, le détecteur électromagnétique (20) comprenant au moins un capteur électromagnétique (22) pour détecter une ou plusieurs propriétés du produit semi-fini en transit dans le canal de détection (21) ;
**caractérisé en ce que** la station de transport et d'inspection (100) peut être commutée entre une configuration de fonctionnement, dans laquelle l'au moins un détecteur électromagnétique (20) est couplé au convoyeur (10) de telle sorte que le canal de guidage (11) est disposé à travers le détecteur électromagnétique (20) pour permettre au détecteur électromagnétique (20) de détecter au moins une propriété du produit semi-fini transporté par le convoyeur (10), et une configuration non opérationnelle, dans laquelle l'au moins un détecteur électromagnétique (20) est désaccouplé du convoyeur (10) de telle sorte que le canal de guidage (11) est disposé à l'extérieur du détecteur électromagnétique (20).

2. Station selon la revendication 1, dans laquelle dans la configuration de fonctionnement, le canal de guidage (11) et le canal de détection (21) sont au moins partiellement interpénétrés et dans laquelle dans la configuration de non-fonctionnement, le canal de guidage (11) et le canal de détection (21) sont désaccouplés l'un de l'autre.

3. Station selon la revendication 1 ou 2, dans laquelle, dans la configuration de fonctionnement, le détecteur électromagnétique (20) est disposé à l'extérieur du convoyeur (10) et entoure au moins partiellement le convoyeur (10).

4. Station selon une ou plusieurs des revendications précédentes, dans laquelle le canal de guidage (11) est ouvert vers le bas et dans laquelle le détecteur électromagnétique (20) présente une structure en U ouverte vers le haut, de sorte que, dans la configuration de fonctionnement, le détecteur électromagnétique (20) est disposé sous le canal de guidage (11) et le ferme.

5. Station selon une ou plusieurs des revendications précédentes, dans laquelle la station de transport et d'inspection (100) est commutée entre la configuration de fonctionnement et la configuration de non-fonctionnement par un mouvement de va-et-vient entre le convoyeur (10) et le détecteur électromagnétique (20).

6. Station selon une ou plusieurs des revendications précédentes, dans laquelle la station de transport et d'inspection (100) est commutée entre la configuration de fonctionnement et la configuration de non-fonctionnement par un mouvement de va-et-vient du convoyeur (10) vers et loin du détecteur électromagnétique (20) et dans laquelle le détecteur électromagnétique (20) est fixe.

7. Station selon la revendication 5 ou 6, dans laquelle le mouvement de va-et-vient est obtenu par rotation mutuelle autour d'un axe horizontal qui se trouve dans un plan essentiellement horizontal.

8. Station selon une ou plusieurs des revendications précédentes, dans laquelle les parois latérales (12) du convoyeur (10) sont pourvues d'ouvertures ou de cassures respectives disposées et/ou configurées de manière à être alignées avec le capteur électromagnétique (22) dans la configuration de fonctionnement, de sorte que le capteur électromagnétique (22) fait directement face au matériau à détecter.

9. Station selon une ou plusieurs des revendications précédentes, comprenant une pluralité d'éléments de guidage de positionnement (12a) et les parois latérales (12) sont munies de sièges d'insertion au niveau d'une partie pour coupler le convoyeur (10) à l'au moins un détecteur électromagnétique (20), les éléments de guidage de positionnement (12a) pouvant être insérés dans les sièges d'insertion.

10. Station selon une ou plusieurs des revendications précédentes, dans laquelle l'au moins un capteur électromagnétique (22) comprend une paire d'antennes (25) configurées pour recevoir et/ou émettre un signal électromagnétique.

11. Station selon une ou plusieurs des revendications précédentes, dans laquelle le détecteur électromagnétique (20) est un détecteur à micro-ondes, de préférence configuré pour fonctionner entre 109 et 1012 Hz, et le canal de détection (21) comprend une chambre de détection, de préférence une chambre de résonance du détecteur à micro-ondes.

12. Station selon une ou plusieurs des revendications précédentes, comprenant au moins un dispositif de nivellement (30) disposé le long du trajet de transport en amont de l'au moins un détecteur électromagnétique (20), l'au moins un dispositif de nivellement (30) étant configuré pour enlever une partie du produit semi-fini du canal de guidage (11).

13. Station selon une ou plusieurs des revendications précédentes, dans laquelle le capteur électromagnétique (22) est configuré pour générer un signal d'identification de l'au moins une propriété mesurée, et dans laquelle la station (100) comprend, ou est associée à, une unité de commande qui est configurée pour recevoir et traiter le signal d'identification pour corriger ou faire varier la distance de l'au moins un dispositif de mise à niveau (30) par rapport à la bande d'aspiration (13) en fonction du signal d'identification.

14. Station selon une ou plusieurs des revendications précédentes, dans laquelle le convoyeur (10) comprend une pluralité de canaux de guidage, chacun pouvant être couplé à un détecteur électromagnétique (20) respectif, les détecteurs électromagnétiques étant de préférence montés sur un même support, et dans laquelle les détecteurs électromagnétiques sont disposés de manière espacée le long d'une direction de transport.

15. Station pour le transport et l'inspection d'un produit semi-fini de l'industrie du tabac, comprenant les étapes suivantes :
- préparer une station (100) selon l'une ou plusieurs des revendications précédentes ;
- passer de la station (100) à la configuration de fonctionnement ;
- transporter le produit semi-fini à travers le canal de détection (21) ;
- détecter, au moyen du détecteur électromagnétique (20), au moins une propriété du produit semi-fini lors de son passage dans le canal de détection (21).

16. Procédé selon la revendication 15, comprenant les étapes suivantes :
- générer un signal identifiant l'au moins une propriété mesurée ;
- corriger ou modifier la distance de l'au moins un dispositif de nivellement (30) par rapport à la bande d'aspiration (13) en fonction du signal d'identification.
